# EUROPÄISCHE PATENTSCHRIFT

(11) **EP 2 451 862 B1**
(45) Veröffentlichungstag und Bekanntmachung des Hinweises auf die Patenterteilung: **03.10.2018**
(21) Anmeldenummer: 10734083.8
(22) Anmeldetag: 08.07.2010
(51) Int. Cl.: C08G 69/26, C08L 77/06, B32B 27/34, D01F 6/60, C08J 5/04

(54) **FORMMASSE AUF BASIS EINES TEREPHTHALSÄURE- SOWIE TRIMETHYLHEXAMETHYLENDIAMIN-EINHEITEN ENTHALTENDEN COPOLYAMIDS**
MOLDING COMPOUND ON THE BASIS OF A COPOLYAMIDE CONTAINING TEREPHTHALIC ACID AND TRIMETHYLHEXAMETHYLENE DIAMINE UNITS
MATIÈRE MOULABLE À BASE D'UN COPOLYAMIDE COMPORTANT DES MOTIFS D'ACIDE TÉRÉPHTALIQUE ET DE TRIMÉTHYLHEXAMÉTHYLÈNEDIAMINE

(30) Priorität: 10.07.2009 DE 102009027611
(43) Veröffentlichungstag der Anmeldung: 16.05.2012
(73) Patentinhaber: Evonik Degussa GmbH, 45128 Essen (DE)
(72) Erfinder: PAWLIK, Andreas, 45657 Recklinghausen (DE); ROOS, Martin, 45721 Haltern am See (DE); BAUMANN, Franz-Erich, 48249 Dülmen (DE); HÄGER, Harald, 59348 Lüdinghausen (DE)
(86) Internationale Anmeldenummer: PCT/EP2010/059809
(87) Internationale Veröffentlichungsnummer: WO 2011/003973

(56) Entgegenhaltungen:
- EP-A2- 0 423 472
- US-A1- 2003 050 376
- DOLDEN ET AL: "Structure-property relationships in amorphous polyamides", POLYMER, ELSEVIER SCIENCE PUBLISHERS B.V, GB LNKD- DOI:10.1016/0032-3861(76)90254-8, Bd. 17, Nr. 10, 1. Oktober 1976 (1976-10-01), Seiten 875-892, XP024121175, ISSN: 0032-3861 [gefunden am 1976-10-01]

## Beschreibung

Gegenstand der Erfindung sind Formmassen auf Basis eines Copolyamids, das Einheiten enthält, die sich von Terephthalsäure, einem linearen Diamin mit 10 bis 12 C-Atomen sowie Trimethylhexamethylendiamin (TMD) herleiten. Bekannte Standardpolyamide wie PA6 und PA66 lassen sich leicht verarbeiten und haben hohe Schmelzpunkte und hohe Wärmeformbeständigkeiten, insbesondere wenn sie mit Glasfasern verstärkt sind oder mineralische Füllstoffe enthalten. Allerdings haben sie typischerweise hohe Wasseraufnahmen von bis zu 10 % bei Lagerung in Wasser. Für viele Anwendungen mit hohen Anforderungen an die Dimensionsstabilität auch unter nassen oder feuchten Bedingungen können diese aliphatischen Polyamide nicht eingesetzt werden. Mit der Wasseraufnahme verändern sich nicht nur die Dimensionen, sondern auch die mechanischen Eigenschaften. Die Steifigkeit und die Festigkeit werden durch die Wasseraufnahme um ein Mehrfaches reduziert. Bei Anwendungen mit mechanischer Belastung in Kontakt mit Wasser oder Umgebungsfeuchte ist der Einsatz dieser Standardpolyamide somit problematisch. Teilaromatische Polyamide des Typs PA6T/6I, wie sie in der US 4 607 073 beschrieben sind, haben eine reduzierte Wasseraufnahme, verglichen mit PA6 und PA66; die mechanischen Eigenschaften bleiben nach Wasseraufnahme weitgehend erhalten. Für Präzisionsteile ist die Wasseraufnahme wegen der Quellung immer noch zu hoch; die Schmelzpunkte sind ebenfalls zu hoch, wobei durch die Verwendung der Isophthalsäure die Kristallinität sowie die Kristallisationsgeschwindigkeit stark abgesenkt werden. Dadurch ist die Verarbeitbarkeit problematisch.

PA10T auf der anderen Seite, wie es ebenfalls in der US 4 607 073 offenbart wird, hat eine stark reduzierte Wasseraufnahme; bei Lagerung in Wasser ändern sich die mechanischen Eigenschaften nicht nennenswert. Das Material ist hochschmelzend mit einem Kristallitschmelzpunkt Tₘ von 316 °C; es ist hochkristallin und kristallisiert sehr schnell, so dass es beim Spritzgießen zum Einfrieren der Düsen kommt. Die Oberflächen von glasfaserverstärkten PA10T-Formteilen sind stark gestört.

In den Schriften EP 0 659 799 A2, EP 0 976 774 A2, EP 1 186 634 A1 und EP 1 375 578 A1 werden teilaromatische Polyamide aus 60 bis 100 Mol-% Terephthalsäure und 60 bis 100 Mol-% einer Diaminkomponente aus 1,9-Nonandiamin und 2-Methyl-1,8-octandiamin beschrieben. Diese Produkte zeichnen sich durch eine gute Verarbeitbarkeit, exzellente Kristallinität, gute Wärmeformbeständigkeit, niedrige Wasseraufnahme, gute chemische Beständigkeit, Dimensionsstabilität und Zähigkeit aus. Das 2-Methyl-1,8-octandiamin ist jedoch in Europa zur Zeit weder in der Neu- noch in der Altstoffverordnung erfasst und somit nicht zugelassen. Dies verhindert eine rasche Produkteinführung auf dem europäischen Markt.

Die Anmelderin vertreibt mit TROGAMID® T5000 ein aus Terephthalsäure und einem Gemisch aus 2,2,4-TMD und 2,4,4-TMD aufgebautes Polyamid. Dieses zeichnet sich durch hohe mechanische Festigkeit und hohe Zähigkeit aus. Allerdings ist das Material, bedingt durch die sperrige Diaminkomponente, amorph und zeigt deshalb nur bedingte, sich insbesondere gegenüber polaren organischen Medien in Spannungsrissbildung äußernde Chemikalienbeständigkeit. Durch die fehlenden kristallinen Anteile wird auch die Formbeständigkeit in der Wärme limitiert; die maximale Wasseraufnahme ist mit ca. 7,5 % relativ hoch. Generell führt der Austausch linearer aliphatischer Diamine durch sperrige Monomere wie TMD in Polyamiden zwar zu erhöhten Glasübergangspunkten, senkt aber gleichzeitig die Kristallinität drastisch ab.

In der US 4 495 328 werden teilkristalline Polyamide aus Terephthalsäure und Mischungen aus Hexamethylendiamin und TMD beschrieben. Als Beispiel wird dort PA6T/TMDT (60/40 in mol-%) angeführt, das einen Schmelzpunkt von 310 °C aufweist. Die US 4 476 280 beschreibt Copolyamide aus Terephthalsäure, Isophthalsäure und Adipinsäure in Kombination mit Hexamethylendiamin und TMD. Entsprechende Systeme werden auch in der US 4 617 342 beschrieben. In allen diesen Schriften werden keine Angaben zur Dimensionsstabilität bei Wasserkontakt sowie zur Mechanik oder Chemikalienstabilität im konditionierten Zustand gemacht.

Die EP 1 988 113 A1 beschreibt eine Polyamidformmasse auf Basis eines Copolyamids 10T/6T, das aus den Monomeren 1,10-Decandiamin, 1,6-Hexandiamin und Terephthalsäure gebildet ist. Der hohe Schmelzpunkt von PA10T wird durch die Mitverwendung von 1,6-Hexandiamin jedoch nur unzureichend abgesenkt.

In der EP 0 423 472 A2 werden Formmassen auf Basis eines Copolyamids beschrieben, das durch Polykondensation von Terephthalsäure und/oder Isophthalsäure mit einem Diamingemisch erhalten wird, welches zum einen die Kombination Decamethylendiamin/Trimethylhexamethylendiamin sowie zum anderen zwingend 10 - 50 Mol-% Bis(4-aminocyclohexyl)methan enthält. Derartige Copolyamide sind amorph.

Im Artikel "Dolden et al., Structure-property relationships in amorphous polyamides, Polymer, 1976, Vol. 17, Nr. 10, S. 875-892" wird gezeigt, wie die Eigenschaften amorpher Polyamide von deren Struktur abhängen. Unter anderem werden dort in der Tabelle 4 auch amorphe Copolyamide auf Basis von Terephthalsäure, Decamethylendiamin, Trimethylenhexamethylendiamin sowie weiteren Aminen offenbart.

Die US 2003/0050376 A1 offenbart Copolyamide aus Terephthalsäure, 1,9-Nonandiamin und 2-Methyl-1,8-octandiamin. Derartige Copolyamide sind kristallin mit Schmelzpunkten oberhalb von 300 °C.

Der Erfindung liegt die Aufgabe zugrunde, gut verarbeitbare Polyamidformmassen bereitzustellen, die sich durch Schmelzpunkte im Bereich von etwa 250 °C bis etwa 300 °C, noch besser bis etwa 290 °C bei ausreichend hoher Kristallinität kombiniert mit möglichst geringen Unterschieden der mechanischen Eigenschaften, der Wärmeformbeständigkeit und der Dimensionsstabilität im spritzfrischen sowie im feuchtekonditionierten Zustand auszeichnen.

Diese Aufgabe wird gelöst durch eine Formmasse, die mindestens 30 Gew.-%, bevorzugt mindestens 40 Gew.-%, besonders bevorzugt mindestens 50 Gew.-% und insbesondere bevorzugt mindestens 60 Gew.-% eines Copolyamids enthält, das sich von folgenden Monomeren herleitet:
a) Zu 50 bis 95 Mol-%, bevorzugt zu 55 bis 90 Mol-% und besonders bevorzugt zu 60 bis 85 Mol-% von der Kombination aus einem Diamin, ausgewählt aus der Gruppe 1,10-Decandiamin, 1,11-Undecandiamin und 1,12-Dodecandiamin, sowie Terephthalsäure, und
b) zu 5 bis 50 Mol-%, bevorzugt zu 10 bis 45 Mol-% und besonders bevorzugt zu 15 bis 40 Mol-% von der Kombination aus einem Diamin, ausgewählt aus der Gruppe 2,2,4-Trimethylhexamethylendiamin (2,2,4-TMD), 2,4,4-Trimethylhexamethylendiamin (2,4,4-TMD) und Mischungen hiervon, sowie Terephthalsäure,
wobei sich die angegebenen Mol-% auf die Summe der Komponenten a) und b) beziehen.

In einer bevorzugten Ausführungsform enthält das Copolyamid keine Bausteine, die sich von weiteren Monomeren herleiten. Ansonsten enthält das Copolyamid maximal 5 Mol-% an Bausteinen, die sich von weiteren Monomeren herleiten.

Bezogen auf die Formmasse können darüber hinaus 0 bis 70 Gew.-%, bevorzugt 0 bis 60 Gew.-%, besonders bevorzugt 0 bis 50 Gew.-% und insbesondere bevorzugt 0,1 bis 40 Gew.-% an Zusatzstoffen enthalten sein. Die Formmasse kann demnach auch aus dem reinen Copolyamid bestehen. Die Bausteine, die sich von weiteren Monomeren herleiten, fallen unter die folgenden Kategorien:
- Entweder leiten sie sich von der Kombination eines Diamins und einer Dicarbonsäure her. Hier sind folgende Fälle zu unterscheiden:
   a) Die Dicarbonsäure ist Terephthalsäure; das Diamin ist ein anderes als eines der anspruchsgemäßen Diamine 1,10-Decandiamin, 1,11-Undecandiamin, 1,12-Decandiamin, 2,2,4-TMD und 2,4,4-TMD.
   b) Die Dicarbonsäure ist eine andere als Terephthalsäure; das Diamin ist eines der eben angeführten anspruchsgemäßen Diamine.
   c) Sowohl die Dicarbonsäure ist eine andere als Terephthalsäure als auch das Diamin ist ein anderes als eines der eben angeführten anspruchsgemäßen Diamine.
- Oder sie leiten sich von einem Lactam oder einer Aminocarbonsäure her.

Geeignete andere Diamine sind beispielsweise Diamine mit 4 bis 22 C-Atomen, etwa 1,4-Butandiamin, 1,5-Pentandiamin, 1,6-Hexandiamin, 1,8-Octandiamin, 1,14-Tetradecandiamin, 1,18-Octadecandiamin, 2-Methyl-1,5-Diaminopentan, 2,2-Dimethyl-1,5-diaminopentan, 4,4'-Diaminodicyclohexylmethan, 3,3'-Dimethyl-4,4'-diaminodicyclohexylmethan, 3,3',5,5'-Tetramethyl-4,4'-diaminodicyclohexylmethan,m- bzw. p-Xylylendiamin oder Isophorondiamin.

Geeignete andere Dicarbonsäuren sind beispielsweise Dicarbonsäuren mit 6 bis 22 C-Atomen, etwa Adipinsäure, Korksäure, Azelainsäure, Sebacinsäure, Undecandisäure, Dodecandisäure, Tridecandisäure, Tetradecandisäure, Hexadecandisäure, Octadecandisäure, 2,2,4- oder 2,4,4-Trimethylhexandisäure, Isophthalsäure, 2,6-Naphthalindicarbonsäure, 1,4-Cyclohexandicarbonsäure oder 2-Methyl-1,4-cyclohexandicarbonsäure.

Geeignete Lactame bzw. Aminocarbonsäuren sind beispielsweise Caprolactam, Laurinlactam oder ω-Aminoundecansäure.

Hierbei können auch Gemische von anderen Diaminen, Gemische von anderen Dicarbonsäuren, Gemische von Lactamen bzw. Aminocarbonsäuren sowie Gemische von anderem Diamin bzw. anderer Dicarbonsäure und Lactam bzw. Aminocarbonsäure eingesetzt werden.

Das Copolyamid wird in der Regel durch Schmelzepolykondensation hergestellt. Entsprechende Verfahren sind Stand der Technik. Alternativ hierzu kann jedoch auch jedes andere bekannte Polyamid-Syntheseverfahren verwendet werden.

Geeignete Zusatzstoffe in der Formmasse sind beispielsweise:
a) Andere Polymere;
b) faserförmige Verstärkungsstoffe;
c) Füllstoffe;
d) Weichmacher;
e) Pigmente und/oder Farbstoffe;
f) Flammschutzmittel;
g) Verarbeitungshilfsmittel und
h) Stabilisatoren.

Andere Polymere sind beispielsweise Polyamide, Polyphenylenether und/oder Schlagzähmodifikatoren.

Geeignete Polyamide sind beispielsweise PA46, PA66, PA68, PA610, PA612, PA613, PA410, PA412, PA810, PA1010, PA1012, PA1013, PA1014, PA1018, PA1212, PA6, PA11 und PA12 sowie Copolyamide, die sich von diesen Typen herleiten. Grundsätzlich können auch teilkristalline aromatische Polyamide, beispielsweise PA6T/6I, PA6T/66, PA6T/6 oder PA6T/6I/66, eingesetzt werden.

Geeignete Polyphenylenether werden nach üblichen Verfahren aus in ortho-Position durch Alkylgruppen disubstituierten Phenolen durch oxidative Kupplung hergestellt. Ein besonders bevorzugter Polyphenylenether ist Poly(2,6-dimethyl-1,4-phenylen)ether, optional in Kombination mit 2,3,6-Trimethylphenoleinheiten. Gemäß dem Stand der Technik enthält der Polyphenylenether funktionelle Gruppen zur Anbindung an die Polyamidmatrix; diese funktionellen Gruppen werden beispielsweise durch Behandlung mit Maleinsäureanhydrid eingebracht.

Geeignete Schlagzähmodifikatoren sind beispielsweise olefinische Polymere, die funktionelle Gruppen enthalten, welche entweder auf die olefinische Hauptkette aufgepfropft sind oder in die Hauptkette einpolymerisiert sind; geeignete Typen und Kombinationen sind beispielsweise in der EP 1 170 334 A2 offenbart. Darüber hinaus können auch Polyacrylatkautschuk oder Ionomere eingesetzt werden.

Die Formmasse enthält an anderen Polymeren bevorzugt maximal 40 Gew.-%, besonders bevorzugt maximal 30 Gew.-% und insbesondere bevorzugt maximal 25 Gew.-%.

Geeignete faserförmige Verstärkungsstoffe sind beispielsweise Glasfasern, Carbonfasern, Aramidfasern, Fasern aus rostfreiem Stahl oder Kaliumtitanatwhisker.

Geeignete Füllstoffe sind beispielsweise Talkum, Glimmer, Silikat, Quarz, Graphit, Molybdändisulfid, Titandioxid, Wollastonit, Kaolin, amorphe Kieselsäuren, Magnesiumcarbonat, Kreide, Kalk, Feldspat, Bariumsulfat, Leitfähigkeitsruß, Graphitfibrillen, Voll- oder Hohl-Glaskugeln oder gemahlenes Glas.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Geeignete Pigmente und/oder Farbstoffe sind beispielsweise Ruß, Eisenoxid, Zinksulfid, Ultramarin, Nigrosin, Perlglanzpigmente und Metallflitter.

Geeignete Flammschutzmittel sind beispielsweise Antimontrioxid, Hexabromcyclododecan, Tetrabrombisphenol, Borate, roter Phosphor, Magnesiumhydroxid, Aluminiumhydroxid, Melamincycanurat und dessen Kondensationsprodukte wie Melam, Melem, Melon, Melaminverbindungen wie Melaminpyro- und -polyphosphat, Ammoniumpolyphosphat sowie phosphororganische Verbindungen bzw. deren Salze wie beispielsweise Resorcinoldiphenylphosphat, Phosphonsäureester oder Metallphosphinate.

Geeignete Verarbeitungshilfsmittel sind beispielsweise Paraffine, Fettalkohole, Fettsäureamide, Paraffinwachse, Montanate oder Polysiloxane.

Geeignete Stabilisatoren sind beispielsweise Kupfersalze, Molybdänsalze, Kupferkomplexe, Phosphite, sterisch gehinderte Phenole, sekundäre Amine, UV-Absorber und HALS-Stabilisatoren.

Die erfindungsgemäße Formmasse kann beispielsweise durch Spritzgießen, Extrusion oder Blasformen zu Formteilen verarbeitet werden. Typische Anwendungsbeispiele im Bereich Spritzguss stellen Konnektoren oder Gehäuse für die Automobil- oder Elektroindustrie sowie Armaturen, Filtertassen oder Gehäuse für Trinkwasseranwendungen dar. Im Bereich Extrusion sind beispielsweise Rohre oder auch ein- und mehrschichtige Folien zu nennen. Weiterhin können aus derartigen Formmassen Pulver für Compositverbunde beispielsweise mit Glas- oder Carbonfasern gefertigt werden. Schließlich seien Ladeluftrohre im Automobil als Beispiel für blasgeformte Teile erwähnt.

Die erfindungsgemäße Polyamidformmasse eignet sich ausgezeichnet für die Herstellung von Monofilamenten (Einzelfasern) als auch von Multifilamenten (z. B. Garne mit jeweils 100 Einzelfasern). Die Massetemperatur variiert hierbei je nach Verfahren und Einsatzviskosität der Formmasse zwischen etwa 280 °C und etwa 340 °C. Typische Recktemperaturen liegen im Bereich von ca. 160 °C bis ca. 180 °C. Die Filamente können beispielsweise für textile Gewebe, als Verstärkungsfasern in Composites, beispielsweise zusammen mit einer duromeren Matrix, oder als Borsten verwendet werden.

Pulver aus der erfindungsgemäßen Formmasse können beispielsweise durch Vermahlen, durch Fällen oder nach allen anderen bekannten Verfahren hergestellt werden. Das Pulver kann beispielsweise für schichtweise formgebende Verfahren (Rapid Prototyping), zur Oberflächenbeschichtung oder zur Herstellung von Faserverbundwerkstoffen (Composites) verwendet werden. Das Pulver hat in der Regel eine Korngröße d₉₀, bestimmt mittels Laserbeugung gemäß ISO 13320:2009, von maximal 500 µm, bevorzugt maximal 400 µm, besonders bevorzugt von maximal 300 µm und insbesondere bevorzugt von maximal 200 µm.

Faserverbundwerkstoffe bestehen aus Verstärkungsfasern und einer Kunststoffmatrix. Die Fasern sind adhäsiv oder kohäsiv mit der sie vollständig umgebenden Matrix verbunden. Durch die Orientierung der Verstärkungsfasern haben Faser-Kunststoff-Verbunde anisotrope mechanische Eigenschaften. Sie weisen in der Regel hohe spezifische Steifigkeiten und Festigkeiten auf. Das macht sie zu geeigneten Werkstoffen in Leichtbauanwendungen. Aus Faserverbundwerkstoffen werden überwiegend flächige Strukturen hergestellt.

Im vorliegenden Fall können die eingesetzten Fasern anorganischer Natur (z. B. Glas- oder Basaltfasern) oder organischer Natur (z. B. Aramid- oder Kohlenstofffasern) sein. Es können auch Gemische verschiedener Fasern eingesetzt werden. Faserverbundwerkstoffe können beispielsweise durch Imprägnieren flächiger Fasergebilde mit Pulver aus der anspruchsgemäßen Formmasse und Heißpressen hergestellt werden; die so erhaltenen Verbunde können flächig oder dreidimensional sein. Flächige Verbunde können anschließend thermisch umgeformt werden.

Beim Imprägnieren des Fasergebildes mit Pulver kommen hauptsächlich zwei Verfahren zur Anwendung:
- Die Imprägnierung über eine Suspension, bei der das Polymer als Feinpulver, in einer Flüssigkeit suspendiert, mit den Fasern in Kontakt gebracht wird, oder
- die Imprägnierung über das Pulverstreuverfahren.

Darüber hinaus können Faserverbundwerkstoffe aus der anspruchsgemäßen Formmasse beispielsweise auch durch eine Schmelzimprägnierung der Verstärkungsfasern oder durch Verpressen von Polymerfolien mit den Verstärkungsfasern (Film Stacking) hergestellt werden.

Bei der Compositherstellung ausgehend von Pulver ist grundsätzlich auch die gemeinsame Verwendung des Pulvers aus der erfindungsgemäßen Formmasse zusammen mit anderen Thermoplastpulvern und insbesondre auch die Kombination mit Ausgangsmaterialien für duroplastische Matrixmaterialien (z. B. Pulver zusammen mit den Komponenten von 2K-Epoxidharzen) möglich. In derartigen faserverstärkten oder auch unverstärkten Systemen zusammen mit einer duroplastischen oder auch thermoplastischen Matrix (beispielsweise Bismaleinimidharz) wirkt das Pulver als schlagzähigkeitserhöhende Komponente.

Die Erfindung wird nachstehend beispielhaft erläutert.

Für die Herstellung der höherschmelzenden Typen des erfindungsgemäßen Copolyamids eignet sich beispielsweise die in der Fig. 2 der US 2 361 717 dargestellte Apparatur. Bei der Anpassung an den Labormaßstab können die dortigen Positionen 23, 24 und 25 durch einen hochdruckfesten Autoklaven ersetzt werden, der durch eine Inertgasüberlagerung einen konstanten Förderdruck durch die Reaktoren gewährleisten kann. In den nachfolgenden Beispielen besaß der erste Rohrreaktor (entspricht der Position 26) eine Länge von 6 m und einen Innendurchmesser von 1,4 mm und der zweite Rohrreaktor (entspricht der Position 27') eine Länge von 10 m und einen Innendurchmesser von 2 mm. Beide Reaktoren wurden mit einem Ölvorlauf von 360 °C betrieben.

### Beispiel 1: CoPA 10T/TMDT (80 : 20)

Im Autoklaven wurden 675,2 g 1,10-Decandiamin (98,6-prozentig), 150,3 g eines Gemisches aus 2,2,4- und 2,4,4-TMD, 789,3 g Terephthalsäure, 452 g vollentsalztes Wasser (VE-Wasser), 3,1 g eines Wärmestabilisators und 2,88 g einer 5-prozentigen wässrigen H₃PO₂-Lösung eingefüllt, dreimal mit Stickstoff inertisiert, der Autoklav abgesperrt und mit einer Ölvorlauftemperatur von 230 °C aufgeheizt. Hierbei bildete sich eine klare, homogene Salzlösung. Der Autoklav wurde mit Stickstoff auf konstant 44 bar Gesamtdruck eingestellt; dieser Druck förderte das Material durch die Anlage. Im Flasher (Position 30) fielen 16,5 g/h Polymer an. Die Analysenergebnisse waren:

| | |
|---|---|
| Carboxylendgruppengehalt: | 113 mmol/kg |
| Aminoendgruppengehalt: | 106 mmol/kg |
| Relative Lösungsviskosität ηᵣₑₗ, gemessen gemäß ISO 307 in einer 0,5 gew.-%igen Lösung in m-Kresol bei 23 °C: | 1,59 |
| T_{g} (gemäß ISO 11357): | 126 °C |
| Tₘ₁ (gemäß ISO 11357): | 256 °C (gemessen beim 2. Aufheizen) |
| Tₘ₂ (gemäß ISO 11357): | 278 °C (Hauptpeak; gemessen beim 2 Aufheizen) |

Das Produkt wurde 30 h bei 180 °C im leichten Stickstoffstrom in fester Phase zu einem Material mit ηᵣₑₗ = 1,79 nachkondensiert.

### Beispiel 2: CoPA 10T/TMDT (94 : 6)

Im Autoklaven wurden 654,9 g 1,10-Decandiamin (98,6-prozentig), 38,0 g eines Gemisches aus 2,2,4- und 2,4,4-TMD, 664,6 g Terephthalsäure, 372,5 g VE-Wasser, 1,2 g Natriumhypophosphit, 2,4 g eines Wärmestabilisators und 1,2 g einer 5-prozentigen H₃PO₂-Lösung eingefüllt, dreimal mit Stickstoff inertisiert, der Autoklav abgesperrt und mit einer Ölvorlauftemperatur von 230 °C aufgeheizt. Hierbei bildete sich eine klare, homogene Salzlösung. Der Autoklav wurde mit Stickstoff auf konstant 42 bar Gesamtdruck eingestellt; dieser Druck förderte das Material durch die Anlage. Im Flasher fielen 17,9 g/h Polymer an. Die Analysenergebnisse waren:

| | |
|---|---|
| Carboxylendgruppengehalt: | 172 mmol/kg |
| Aminoendgruppengehalt: | 167 mmol/kg |
| ηᵣₑₗ | 1,42 |
| T_{g}: | 122 °C |
| Tₘ: | 297 °C (Hauptpeak) |

Das Produkt wurde 40 h bei 180 °C im leichten Stickstoffstrom in fester Phase zu einem Material mit ηᵣₑₗ = 1,74 nachkondensiert.

### Beispiel 3:

Entsprechend Beispiel 1 wurde das in den nachfolgenden Tabellen aufgeführte weitere Copolyamid mit einem Decandiamin/TMD-Verhältnis von 85 : 15 hergestellt.

### Referenzbeispiel 1:

Entsprechend Beispiel 1 wurde das Homopolymer PA10T hergestellt.

### Beispiel 4:

Zur Herstellung eines CoPA 10T/TMDT (70 : 30) wurde ein 30 I-Rührautoklav mit folgenden Einsatzstoffen beschickt:

| | |
|---|---|
| 3,962 kg | 1,10-Decandiamin (als 99,3%ige wässrige Lösung), |
| 1,549 kg | 2,2,4- und 2,4,4-Trimethylhexamethylendiamin-Isomerengemisch |
| 5,563 kg | Terephthalsäure sowie |
| 1,12 g | einer 50 %igen wässrigen Lösung von hypophosphoriger Säure (entspricht 0,006 Gew.-%) mit |
| 5,96 kg | VE-Wasser |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 305 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 110 °C getrocknet.
Austrag: 7,4 kg

Das Produkt wies folgende Kennwerte auf:

| | |
|---|---|
| Kristallitschmelzpunkt Tₘ: | 270 °C |
| Relative Lösungsviskosität ηᵣₑₗ: | 1,76 |
| COOH-Endgruppen: | 291 mmol/kg |
| NH₂-Endgruppen: | 17 mmol/kg |

### Beispiel 5:

Zur Herstellung eines CoPA 12T/TMDT (60 : 40) wurde ein 30 I-Rührautoklav mit folgenden Einsatzstoffen beschickt:

| | |
|---|---|
| 3,788 kg | 1,12-Dodecandiamin (als 99,4%ige wässrige Lösung), |
| 1,982 kg | 2,2,4- und 2,4,4-Trimethylhexamethylendiamin-Isomerengemisch |
| 5,305 kg | Terephthalsäure sowie |
| 1,13 g | einer 50 %igen wässrigen Lösung von hypophosphoriger Säure (entspricht 0,006 Gew.-%) mit |
| 5,96 kg | VE-Wasser |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 295 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 110 °C getrocknet.
Austrag: 8,9 kg

Das Produkt wies folgende Kennwerte auf:

| | |
|---|---|
| Kristallitschmelzpunkt Tₘ: | 232 °C |
| Relative Lösungsviskosität ηᵣₑₗ: | 1,53 |
| COOH-Endgruppen: | 275 mmol/kg |
| NH₂-Endgruppen: | 84 mmol/kg |

### Beispiel 6:

Zur Herstellung eines CoPA 12T/TMDT (70 : 30) wurde ein 30 I-Rührautoklav mit folgenden Einsatzstoffen beschickt:

| | |
|---|---|
| 4,356 kg | 1,12-Dodecandiamin (als 99,4%ige wässrige Lösung), |
| 1,465 kg | 2,2,4- und 2,4,4-Trimethylhexamethylendiamin-Isomerengemisch |
| 5,258 kg | Terephthalsäure sowie |
| 1,13 g | einer 50 %igen wässrigen Lösung von hypophosphoriger Säure (entspricht 0,006 Gew.-%) mit |
| 5,97 kg | VE-Wasser |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 295 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 110 °C getrocknet.
Austrag: 9,1 kg

Das Produkt wies folgende Kennwerte auf:

| | |
|---|---|
| Kristallitschmelzpunkt Tₘ: | 257 °C |
| Relative Lösungsviskosität ηᵣₑₗ: | 1,56 |
| COOH-Endgruppen: | 269 mmol/kg |
| NH₂-Endgruppen: | 17 mmol/kg |

### Beispiel 7:

Entsprechend Beispiel 6 wurde ein Copolyamid mit einem Dodecandiamin/TMD-Verhältnis von 75 : 25 hergestellt.

### Beispiele 8 und 9:

Entsprechend Beispiel 4 wurden zwei Copolyamide mit einem Decandiamin/TMD-Verhältnis von 60 : 40 beziehungsweise 52 : 48 hergestellt.

### Vergleichsbeispiele 1 und 2:

Entsprechend Beispiel 4 wurden zwei Copolyamide mit einem Decandiamin/TMD-Verhältnis von 33 : 67 beziehungsweise 12 : 88 hergestellt.

Die Eigenschaften der hergestellten Polyamide bzw. Copolyamide sind in den nachfolgenden Tabellen wiedergegeben.

**Tabelle 1: Calorimetrische Daten der Copolyamide 10T/TMDT, bestimmt gemäß ISO 11357 beim 2. Aufheizen**

| Co-PA10T/TMDT | Referenz 1 | Beispiel 2 | Beispiel 3 | Beispiel 1 | Beispiel 4 | Beispiel 8 | Beispiel 9 | Vergleichsbeispiel 1 | Vergleichsbeispiel 2 |
|---|---|---|---|---|---|---|---|---|---|
| 10-Anteil [Mol-%] | 100 | 94 | 85 | 80 | 70 | 60 | 52 | 33 | 12 |
| TMD-Anteil (Mol-%] | 0 | 6 | 15 | 20 | 30 | 40 | 48 | 67 | 88 |
| Schmelzenthalpie [J/g] | 64 | 62 | 62 | 52 | 49 | 45 | 17 | 0 | 0 |
| Tₘ [°C] | 309 | 297 | 282 | 274 | 270 | 263 | 251 | - | - |
| T_{g}[°C] | 119 | 122 | 123 | 125 | 128 | 133 | 134 | 137 | 145 |

**Tabelle 2: Calorimetrische Daten der Copolyamide 12T/TMDT, bestimmt gemäß ISO 11357 beim 2. Aufheizen**

| CO-PA12T/TMDT | Beispiel | Beispiel | Beispiel |
|---|---|---|---|
| | 7 | 6 | 5 |
| 12-Anteil [Mol-%] | 75 | 70 | 60 |
| TMD-Anteil (Mol-%] | 25 | 30 | 40 |
| Schmelzenthalpie [J/g] | 51 | 52 | 38 |
| Tₘ[°C] | 263 | 258 | 247 |
| T_{g}[°C] | 116 | 116 | 118 |

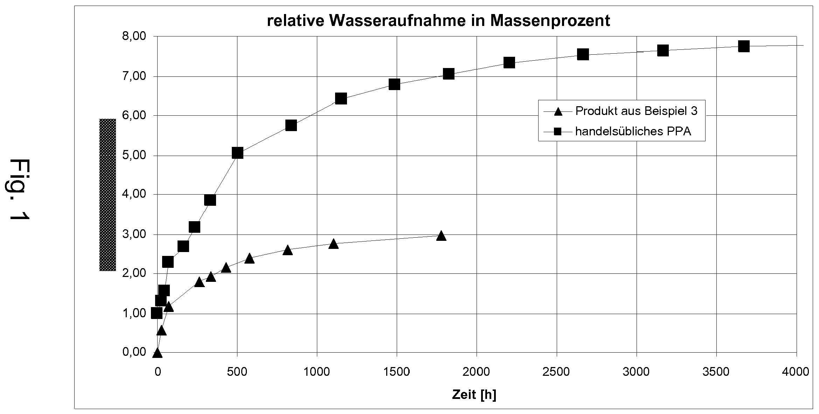

In der **Fig. 1** wird die relative Wasseraufnahme des Produkts aus dem Beispiel 3 (Vollkontaktlagerung bei 23 °C) verglichen mit derjenigen eines handelsüblichen PPA hergestellt aus 1,6-Hexamethylendiamin und einem Dicarbonsäuregemisch aus 65 Mol-% Terephthalsäure, 25 Mol-% Isophthalsäure und 10 Mol-% Adipinsäure. Man erkennt, dass die Wasseraufnahme beim erfindungsgemäßen Copolyamid erheblich niedriger ist.

Die Tabelle 3 zeigt, dass das Produkt aus Beispiel 3 nach Feuchtekonditionierung (hier: Vollkontaktlagerung bei 120 °C im Autoklaven) seine mechanischen Eigenschaften im Wesentlichen beibehält. Die Erhöhung des E-Moduls im ersten Fall ist auf Rekristallisation zurückzuführen.

**Tabelle 3: Mechanische Eigenschaften im trockenen sowie im feuchtekonditionierten Zustand**

| Produkt aus Beispiel 3 | Lagerung [h] | E-Modul gemäß ISO 527 [MPa] | Bruchspannung gemäß ISO 527 [MPa] | Reißdehnung gemäß ISO 527 [MPa] |
|---|---|---|---|---|
| Pur | 0 | 2594 | 81 | 5 |
| | 100 | 2819 | 80 | 6 |
| mit 30 Gew.-% | 0 | 8702 | 273 | 3 |
| Glasfasern | 24 | 8404 | 269 | 3 |

### Pulverherstellung :

Das Produkt aus Beispiel 8 wurde als Stranggranulat von ca. 5 mm Länge und ca. 3 mm Durchmesser auf einer Stiftmühle (Alpine CW 160) vermahlen. Mittels Kühlschnecke wurde das Einsatzgranulat auf -50 °C heruntergekühlt, im Mahlraum auf bis zu 220 m/s beschleunigt und zwischen den Stiften der gegenläufigen Mahlscheiben verrieben. Hierbei entstand bei einem Durchsatz von 15 kg/h ein Mahlgut, bei dem der Anteil mit einem Korndurchmesser von kleiner als 100 µm 50 Gew.-% betrug. Das Mahlgut wurde bei 63 µm gesiebt; der erhaltene Feinanteil hatte eine Korngrößenverteilung (mittels Laserbeugung bestimmt) von d₁₀ = 14,9 µm, d₅₀ = 43,7 µm und d₉₀ = 75,4 µm.

Dieses Feinpulver wurde zur Herstellung von Faserverbundwerkstoffen verwendet.

## Patentansprüche

1. Formmasse, die mindestens 30 Gew.-% eines Copolyamids enthält, das sich von folgenden Monomeren herleitet:
a) Zu 50 bis 95 Mol-% von der Kombination aus einem Diamin, ausgewählt aus der Gruppe 1,10-Decandiamin, 1,11-Undecandiamin und 1,12-Dodecandiamin, sowie Terephthalsäure, und
b) zu 5 bis 50 Mol-% von der Kombination aus einem Diamin, ausgewählt aus der Gruppe 2,2,4-Trimethylhexamethylendiamin, 2,4,4-Trimethylhexamethylendiamin und Mischungen hiervon, sowie Terephthalsäure,
wobei sich die angegebenen Mol-% auf die Summe der Komponenten a) und b) beziehen und wobei das Copolyamid 0 bis 5 Mol-% an Bausteinen enthält, die sich von weiteren Monomeren herleiten,
wobei diese Bausteine, die sich von weiteren Monomeren herleiten, unter die folgenden Kategorien fallen:
- Entweder leiten sie sich von der Kombination eines Diamins und einer Dicarbonsäure her, hier sind folgende Fälle zu unterscheiden:
a) die Dicarbonsäure ist Terephthalsäure; das Diamin ist ein anderes als eines der anspruchsgemäßen Diamine 1,10-Decandiamin, 1,11-Undecandiamin, 1,12-Decandiamin, 2,2,4-TMD und 2,4,4-TMD,
b) die Dicarbonsäure ist eine andere als Terephthalsäure; das Diamin ist eines der oben angeführten anspruchsgemäßen Diamine,
c) sowohl die Dicarbonsäure ist eine andere als Terephthalsäure als auch das Diamin ist ein anderes als eines der oben angeführten anspruchsgemäßen Diamine;
- oder sie leiten sich von einem Lactam oder einer Aminocarbonsäure her.

2. Formmasse gemäß Anspruch 1,
**dadurch gekennzeichnet,**
**dass** sie aus dem reinen Copolyamid besteht.

3. Formmasse gemäß Anspruch 1,
**dadurch gekennzeichnet,**
**dass** sie neben dem Copolyamid mindestens 0,1 Gew.-% an Zusatzstoffen enthält.

4. Formmasse gemäß einem der Ansprüche 1 bis 3,
**dadurch gekennzeichnet,**
**dass** sie ein Pulver ist.

5. Formteil, hergestellt aus der Formmasse gemäß einem der Ansprüche 1 bis 4.

6. Folie, hergestellt aus der Formmasse gemäß einem der Ansprüche 1 bis 4.

7. Filament, hergestellt aus der Formmasse gemäß einem der Ansprüche 1 bis 4.

8. Faserverbundwerkstoff, der die Formmasse gemäß einem der Ansprüche 1 bis 4 enthält.

## Claims

1. Molding composition which comprises at least 30% by weight of a copolyamide which derives from the following monomers:
a) to an extent of from 50 to 95 mol% from the combination of a diamine selected from the group of 1,10-decanediamine, 1,11-undecanediamine and 1,12-dodecanediamine with terephthalic acid, and
b) to an extent of from 5 to 50 mol% from the combination of a diamine selected from the group of 2,2,4-trimethylhexamethylenediamine, 2,4,4-trimethylhexamethylenediamine and mixtures thereof with terephthalic acid,
where the stated mol% values are based on the entirety of components a) and b) and where the copolyamide comprises from 0 to 5 mol% of units which derive from other monomers,
where these units which derive from other monomers can be categorized as follows:
- Firstly they can derive from the combination of a diamine and a dicarboxylic acid; a distinction can be drawn between the following cases here:
a) the dicarboxylic acid is terephthalic acid; the diamine is a diamine other than the diamines of the claims, which are 1,10-decanediamine, 1,11-undecanediamine, 1,12-decanediamine, 2,2,4-TMD, and 2,4,4-TMD,
b) the dicarboxylic acid is an acid other than terephthalic acid; the diamine is one of the abovementioned diamines of the claims,
c) not only is the dicarboxylic acid an acid other than terephthalic acid, but the diamine is a diamine other than the abovementioned diamines of the claims;
- secondly they can derive from a lactam or an aminocarboxylic acid.

2. Molding composition according to Claim 1,
**characterized in that**
it is composed of the pure copolyamide.

3. Molding composition according to Claim 1,
**characterized in that**
it comprises at least 0.1% by weight of additives alongside the copolyamide.

4. Molding composition according to any of Claims 1 to 3,
**characterized in that**
it is a powder.

5. Molding produced from the molding composition according to any of Claims 1 to 4.

6. Foil produced from the molding composition according to any of Claims 1 to 4.

7. Filament produced from the molding composition according to any of Claims 1 to 4.

8. Fiber composite material which comprises the molding composition according to any of Claims 1 to 4.

## Revendications

1. Matériau de moulage, qui contient au moins 30 % en poids d'un copolyamide qui dérive des monomères suivants :
a) 50 à 95 % en moles de la combinaison d'une diamine, choisie dans le groupe constitué par la 1,10-décane-diamine, la 1,11-undécane-diamine et la 1,12-dodécane-diamine, ainsi que d'acide téréphtalique, et
b) 5 à 50 % en moles de la combinaison d'une diamine, choisie dans le groupe constitué par la 2,2,4-triméthylhexaméthylène-diamine, la 2,4,4-triméthylhexaméthylène-diamine et leurs mélanges, ainsi que d'acide téréphtalique,
les % en moles indiqués se rapportant à la somme des composants a) et b), et le copolyamide contenant 0 à 5 % en moles de constituants qui dérivent d'autres monomères, ces constituants qui dérivent d'autres monomères appartenant aux catégories suivantes :
- ils dérivent soit de la combinaison d'une diamine et d'un acide dicarboxylique, les cas suivants devant être différenciés :
a) l'acide dicarboxylique est l'acide téréphtalique ; la diamine est une autre que les diamines selon la revendication : la 1,10-décane-diamine, la 1,11-undécane-diamine, la 1,12-décane-diamine, la 2,2,4-TMD et la 2,4,4-TMD,
b) l'acide dicarboxylique est un autre que l'acide téréphtalique ; la diamine est une des diamines selon la revendication listées précédemment,
c) l'acide dicarboxylique est un autre que l'acide téréphtalique et la diamine est également une autre que les diamines selon la revendication listées précédemment ;
- soit ils dérivent d'un lactame ou d'un acide aminocarboxylique.

2. Matériau de moulage selon la revendication 1, **caractérisé en ce qu'**il est constitué du copolyamide pur.

3. Matériau de moulage selon la revendication 1, **caractérisé en ce qu'**il contient au moins 0,1 % en poids d'additifs en plus du copolyamide.

4. Matériau de moulage selon l'une quelconque des revendications 1 à 3, **caractérisé en ce qu'**il consiste en une poudre.

5. Pièce moulée, fabriquée à partir du matériau de moulage selon l'une quelconque des revendications 1 à 4.

6. Feuille, fabriquée à partir du matériau de moulage selon l'une quelconque des revendications 1 à 4.

7. Filament, fabriqué à partir du matériau de moulage selon l'une quelconque des revendications 1 à 4.

8. Matériau composite fibreux, qui contient le matériau de moulage selon l'une quelconque des revendications 1 à 4.
